# EUROPEAN PATENT SPECIFICATION

(11) **EP 2 610 991 B1**
(45) Date of publication and mention of the grant of the patent: **09.11.2016**
(21) Application number: 12196131.2
(22) Date of filing: 07.12.2012
(51) Int. Cl.: H02J 5/00, H02J 7/02

(54) **Electromagnetic induction device and applied electronic devices thereof**
Elektromagnetische Induktionsvorrichtung und angewandte elektronische Vorrichtungen davon
Dispositif à induction électromagnétique et dispositifs électroniques appliqués correspondants

(30) Priority: 31.12.2011 CN 201120575122 U
(43) Date of publication of application: 03.07.2013
(73) Proprietor: Jie Du Electronics Technology Co., Ltd., Dongguan City (CN); Yu, Sam, 523000 Dongguan Guangdong (CN)
(72) Inventor: Tang, Guang-Shi, Dongguan Guangdong 523000 (CN)
(74) Representative: Jeannet, Olivier

(56) References cited:
- CN-Y- 201 134 682
- CN-Y- 201 265 752
- CN-Y- 201 323 683

## Description

The present invention relates to an electromagnetic induction device and electronic devices apply thereof, particularly to a small and low-cost electromagnetic induction device. And a charger, an emergency illustrator apply present invention.

### BACKGROUND OF THE INVENTION

Due to upgrade of live quality of human being, electronic products such as flashlight, small fan and electrical shaver have become essential in daily life of modern people. Because of frequent using and limitation of environment, said electronic products need to be recharged frequently. There are 2 methods of recharging in prior art, first is to link said electronic products to the power source by power line, the electricity from the power source enters into the battery of said electronic products by power line to achieve recharge; second one is to exchange said battery of said electronic products, for rechargeable battery, it can be repeatedly used by putting on specific charge-place. However, the disadvantage of first method is that recharging process would be interrupted if the power line is broken, or one or double ends of the power line is detached or loosen, cause ineffective contact, thus, the effect of recharging process is unstable and may damage parts of said electronic products. In the other hand, some electronic products such as flashlight or emergency illuminator would be recharged by power source when it is not used, however, user would meet some difficulties to detach it from charge-place or power line in emergency conditions, thus, some wireless recharger and corresponding electronic products are invented.

By reference of U.S. publication No.US2010/0066251, which reveals a charging device for recharging of emergency illuminator, includes a charge-place, an electromagnetic induction transmitting model which is installed in said charge-place, and an electromagnetic induction receiving model which is installed in the shell of the illuminator, the principle of recharging of the invention is by electromagnetic induction between the large coil in the output end of said electromagnetic induction transmitting model and the small coil in said input end of said electromagnetic induction receiving model, the electricity enters into the device and through said large coil, form a magnetic field, and said small coil cross the centre of said large coil, thus, current is produced on the small coil by electromagnetic induction when the electricity enters through said large coil, than the current is guided to recharge the load. However, the design causes more consumed material of producing and larger volume of the device which can't be installed into electronic products with small volume, thus, the cost of production increased, and the practicality of the device is also be reduced, therefore, to achieve lower cost of production and smaller volume then conventional art have become the main issue of present invention.

Documents CN201265752Y, CN201323683Y and CN201134682Y disclose various devices that do not allow to overcome these problems.

### SUMMARY OF THE INVENTION

For achieving the aforementioned object, the present invention provides an electromagnetic induction device, as defined in the appended claim 1.

Said electromagnetic induction transmitting model comprises first induction circuit, and said electromagnetic induction receiving model comprises second induction circuit;
Said first and second induction circuit are corresponding to each other, and said second induction circuit is resonance induction circuit, said electromagnetic induction coil or electromagnetic induction bar becomes inductance of said resonance induction circuit.

The output frequency of said electromagnetic induction transmitting model is 250-400KHZ, to compare with conventional device with the 150KHZ output frequency, with better transacting efficiency of occurred electromagnetic induction.

The electromagnetic induction transmitting model comprises:
A voltage step-down circuit which is connected to the electricity source;
The output terminal of said voltage step-down circuit is connected with first rectifier and filter;
The output terminal of said first rectifier and filter is connected with a vibrating circuit; and
The output terminal of said vibrating circuit is connected with first induction circuit;
The electromagnetic induction receiving model comprises:
   A second induction circuit which can produce voltage by electromagnetic induction with the first induction circuit;
   A second rectifier and filter connect with said second induction circuit;
   A voltage-stabilizing circuit connects to the output terminal of said second rectifier and filter, the output terminal of said voltage-stabilizing circuit connects and supplies electricity to the load, thus, present invention can provide stable electricity to the load.

In the 1 st embodiment of present invention, the first shell has a groove, a hollow rod is disposed on the bottom of the groove, and the electromagnetic induction bar is installed in said hollow rod;
An annular protecting case that the size and shape is fitted with said groove is disposed on the second shell, said protecting case covers on said hollow rod, and the electromagnetic induction coil is installed in the inside of said protecting case.

In the 2nd embodiment, an annular protecting case is disposed on the first shell, said protecting case covers on said hollow rod, and the electromagnetic induction coil is installed in the inside of said protecting case;
The second shell has a hollow rod for being inserted inside said protecting case that the size and shape is fitted with, and the electromagnetic induction bar is installed in said rod.

In 3rd embodiment of present invention, a hollow rod is convex from the first shell, and the electromagnetic induction bar is installed in said hollow rod; said second shell contains a concave part forms a groove that the size and shape is fitted with said hollow rod, the electromagnetic induction coil is installed inside the second shell and surrounding said groove.

The present invention also provides an electrical charger for recharging electronic products, which comprises:
a charger;
an electromagnetic induction device;
the charge-place of said charger comprises an electricity input socket for connecting the electricity sources, the electromagnetic induction transmitting model is installed in the shell of said charge-place and connected with said electricity input socket, the electromagnetic induction receiving model is installed inside the shell of said electronic products and connected with the battery which is for power supplying of said electronic products.

The present invention also provides an emergency illuminator, which comprises:
a charger;
an illuminator; and
an electromagnetic induction device;
said charger comprises an electricity input socket for connecting the electricity sources;
the shell of said illuminator contains a rechargeable battery, a sensor, illuminating control circuit and illuminating circuit;
the electromagnetic induction transmitting model is installed in the shell of said charge-place and connected with said electricity input socket; the electromagnetic induction receiving model is installed inside the shell of said emergency illuminator, and connected with said rechargeable battery which is connected with said illuminating circuit for supplying power used for illumination, said illuminating control circuit controls the switch on/off status of said illuminating circuit by the signal from the sensor.

### BRIEF DESCRIPTION OF DRAWINGS

Fig. 1a is diagram of component structure of present invention.
Fig. 1b is vertical cross section of electromagnetic induction occurring part of present invention.'
Fig. 2 is diagram of component structure of emergency illuminator which applies present invention.
Fig. 3 is vertical cross section of emergency illuminator which applies present invention.
Fig. 4 is vertical cross section of illuminator part of what is shown in Fig. 3.
Fig. 5 is vertical cross section of charge-place part of what is shown in Fig. 3.
Fig. 6 is vertical cross section of emergency illuminator which applies embodiment 2 of present invention.
Fig. 7 is vertical cross section of illuminator part of what is shown in Fig. 6.
Fig. 8 is vertical cross section of charge-place part of what is shown in Fig. 6.
Fig. 9 is vertical cross section of emergency illuminator which applies embodiment 3 of present invention.
Fig. 10 is vertical cross section of illuminator part of what is shown in Fig. 9.
Fig. 11 is vertical cross section of charge-place part of what is shown in Fig. 9.

### DETAILED DESCRIPTION OF THE INVENTION

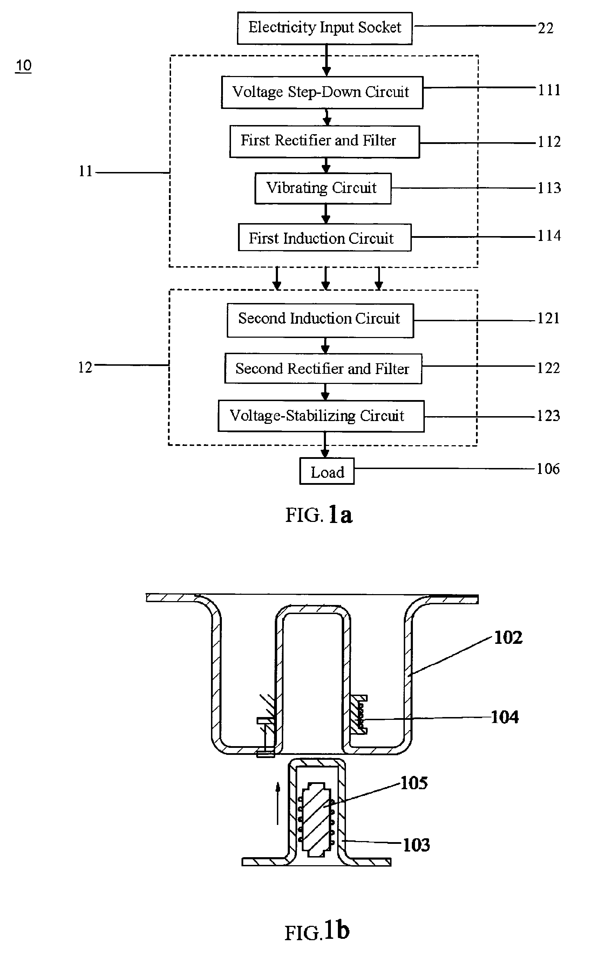

Refer Figs. 1a and b, the present invention reveals an electromagnetic induction device 10 for recharging the flashlight, small fan, electrical shaver, desk lamp, head light and camping light, which comprises:
an electromagnetic induction transmitting model 11;
an electromagnetic induction receiving model 12;
a first shell 102 which is an independent unit;
a second shell 103 which is an independent unit;
said electromagnetic induction transmitting model 11 is installed in said first shell 102, when said electromagnetic induction receiving model 12 is installed in said second shell 103;
the output terminal of said electromagnetic induction transmitting model 11 comprises an electromagnetic induction coil 104; and the input terminal of said electromagnetic induction receiving model 12 comprises an electromagnetic induction bar 105;
said first shell 102 contains a concave part at where the electromagnetic induction coil 104 is installed; and said second shell contains a convex part at where the electromagnetic induction bar 105 is disposed;
the size and shape of the groove of said concave part is fitted with said convex part, the electromagnetic induction bar 105 would be inserted into the centre of the electromagnetic induction coil 104 when said convex part is inserted into said concave part, and the electrical current would occur by electromagnetic induction when the electricity enters into said electromagnetic induction coil 104 or electromagnetic induction bar 105 to produce the magnetic field.

Said electromagnetic induction transmitting model 11 comprises a first induction circuit 114, and said electromagnetic induction receiving model 12 comprises second induction circuit 121;
Said first and second induction circuit 114, 121 are corresponding to each other.

Refer Fig. 1a, the electromagnetic induction transmitting model 11 comprises:
a voltage step-down circuit 111 which is connected to electricity input socket 22 for connecting the electricity source;
the output terminal of said voltage step-down circuit 111 is connected with first rectifier and filter 112;
the output terminal of said first rectifier and filter 112 is connected with a vibrating circuit 113; and
the output terminal of said vibrating circuit 113 is connected with a first induction circuit 114;
The electromagnetic induction receiving model 12 comprises:
a second induction circuit 121 which can produce voltage by electromagnetic induction with the first induction circuit 114;
a second rectifier and filter 122 connect with said second induction circuit 121;
a voltage-stabilizing circuit 123 connects to the output terminal of said second rectifier and filter 122, the output terminal of said voltage-stabilizing circuit 123 connects and supplies electricity to the load 106, thus, the present invention can provide stable electricity to the load 106.

In the 1 st embodiment of the present invention, said second induction circuit 121 is resonance induction circuit, said electromagnetic induction coil 104 or electromagnetic induction bar 105 becomes inductance of said resonance induction circuit, the output frequency of said electromagnetic induction transmitting model 11 is 250-400 KHZ.

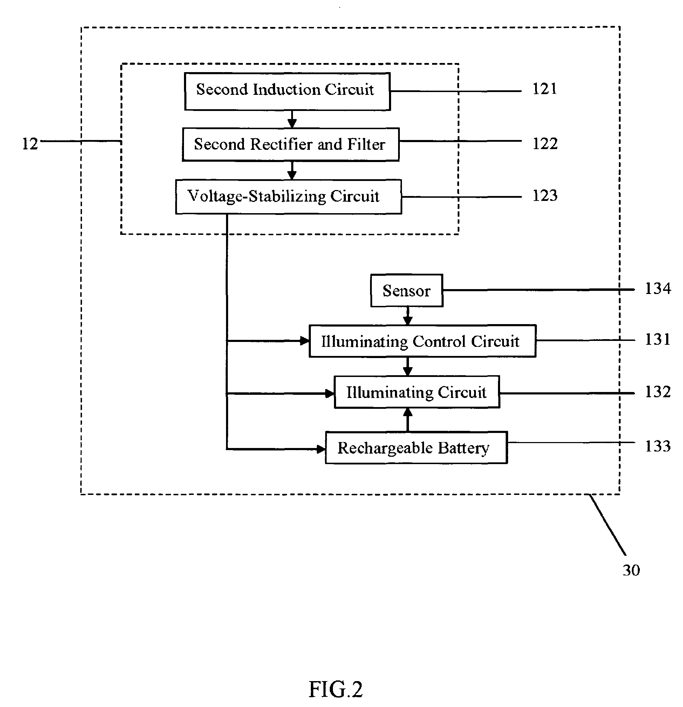

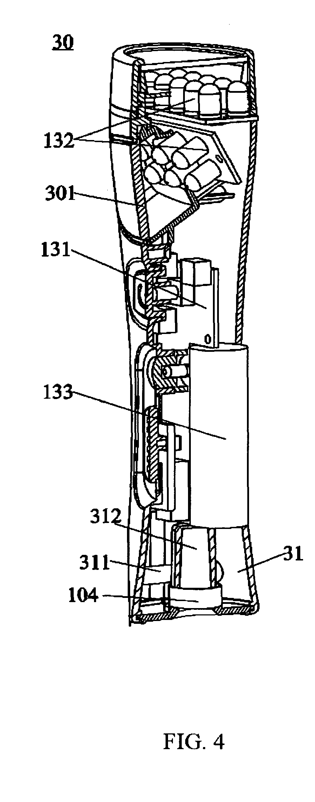

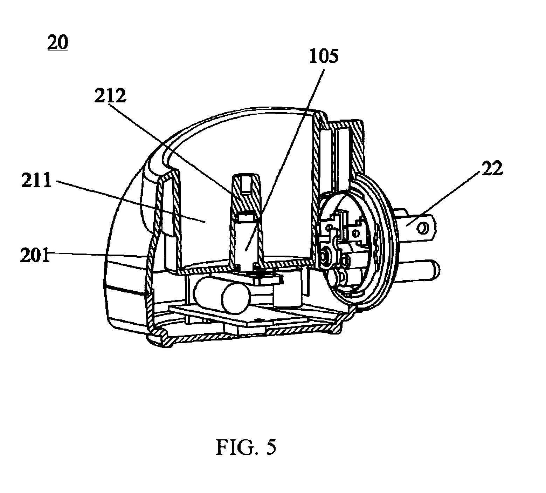

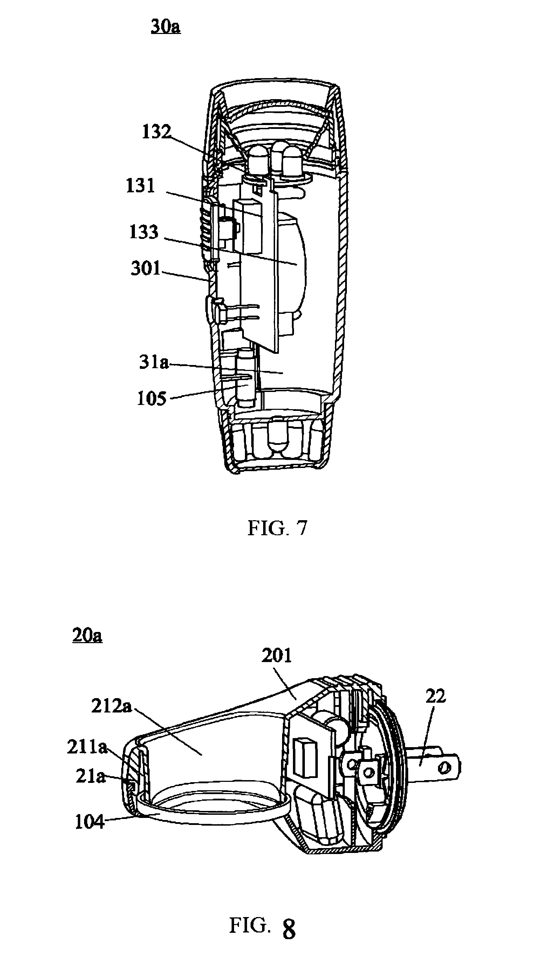

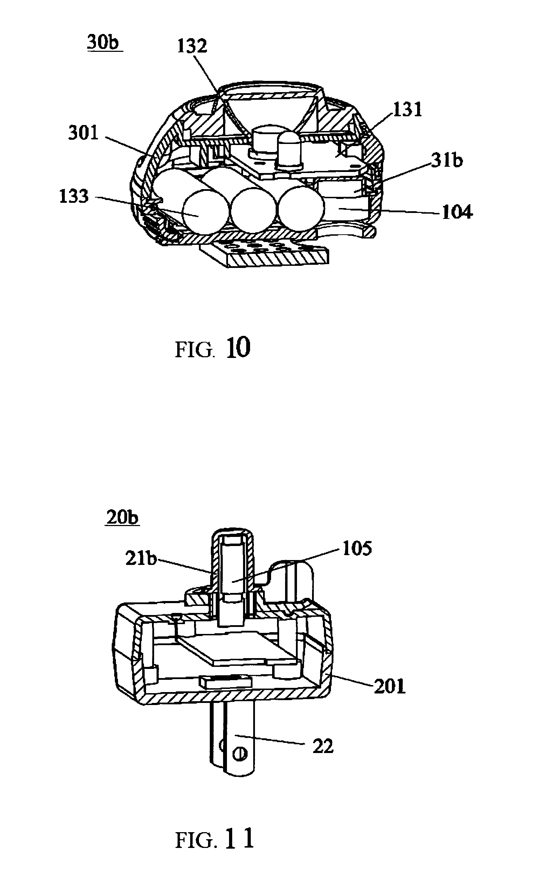

Refer Figs 2-11, the present invention reveals an emergency illuminator 100, which comprises:
a charger 20 (20a, 20b);
an illuminator 30 (30a, 30b); and
an electromagnetic induction device 10;
said charger 20(20a, 20b) comprises an electricity input socket 22 for connecting the electricity sources;
The shell 301 of said illuminator 30(30a, 30b) contains a rechargeable battery 133, a sensor 134, illuminating control circuit 131 and an illuminating circuit 132;
The electromagnetic induction transmitting model 11 of said electromagnetic induction device 10 is installed in the shell 201 of said charger 20(20a, 20b) and connected with said electricity input socket 22; the electromagnetic induction receiving model 12 of said electromagnetic induction device 10 is installed inside the shell 301 of said illuminator, and connected with said rechargeable battery 133 which is connected with said illuminating circuit 132 for supplying power used for illumination, said illuminating control circuit 131 controls the switch on/off status of said illuminating circuit 132 by the signal from the sensor 134. The output terminal of said electromagnetic induction transmitting model 11 comprises an electromagnetic induction coil 104; and the input terminal of said electromagnetic induction receiving model 12 comprises an electromagnetic induction bar 105
The shell 201 of the charger and the shell 301 of the illuminator contains a concave part at where the electromagnetic induction coil 104 is installed; a convex part at where the electromagnetic induction bar 105 is disposed;
The size and shape of the concave part is fitted with said convex part, the electromagnetic induction bar 105 would be inserted into the centre of the electromagnetic induction coil 104 when said convex part is inserted into said concave part, and the electrical current would occur by electromagnetic induction when the electricity enters into said electromagnetic induction coil 104 or electromagnetic induction bar 105 to produce the magnetic field.

If said electromagnetic induction coil 104 is installed in the shell 201 of said charger 20(20a, 20b), the electromagnetic induction bar 105 would be installed in the shell 301 of said illuminator, and vice versa.

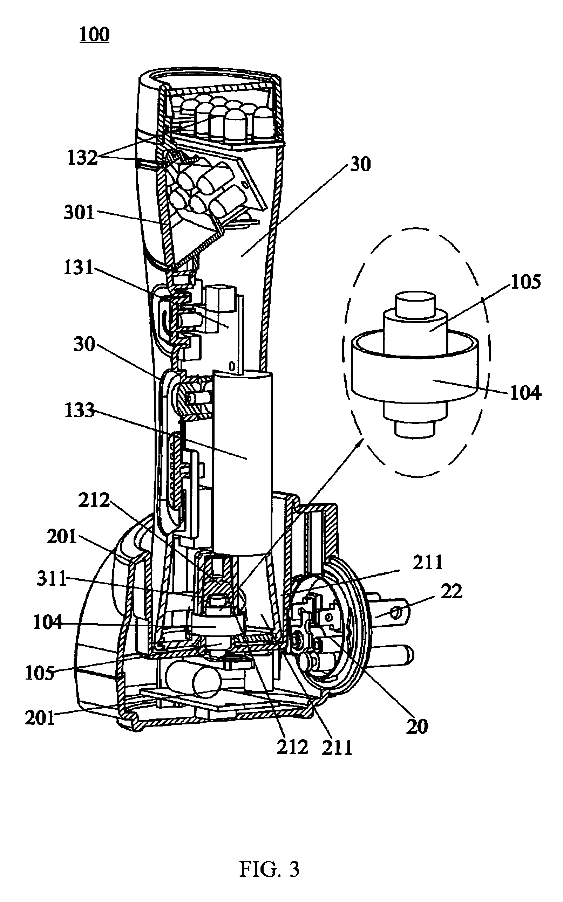

Refer Figs 3-5, which reveal the 1 st embodiment of said illuminator 100, the shell 201 of said charger 20 has a groove 211, a hollow rod 212 is disposed on the bottom of the groove 211, and the electromagnetic induction bar 105 is installed in said hollow rod 212; there is an annular protecting case 31 on the shell 301 of the illuminator 30, that the size and shape is fitted with said groove 211 which is disposed on the shell 201 of said charger 20, said protecting case 31 covers on said hollow rod 212, and the electromagnetic induction coil 104 is installed in the inside of said protecting case 31.

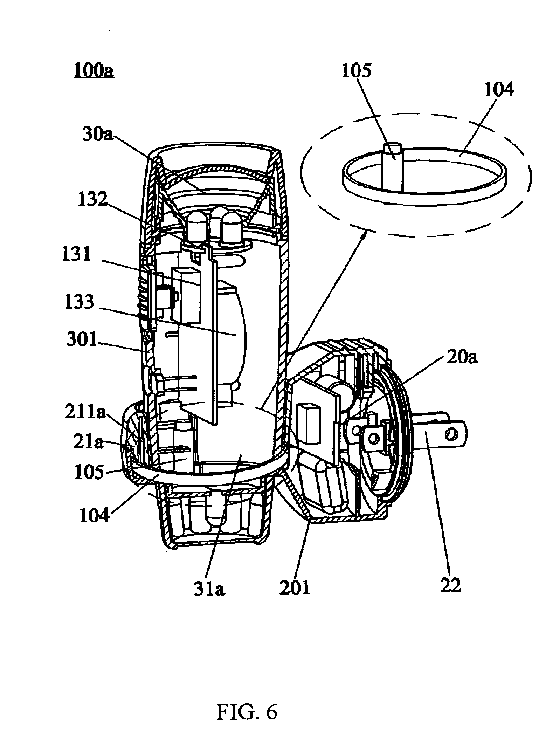

Refer Figs 6-8, which reveal the 2nd embodiment of said illuminator 100, an annular protecting case 21a is disposed on the shell 201 of said charger 20a, the ring 211 a of said protecting case 21a is hollow for containing said electromagnetic induction coil 104 which is tangled on the ring centre 212a of said protecting case 21 a, said shell 301 on the illuminator 30 comprises a hollow rod 31a which can penetrate said ring centre 212a and the size is fitted with said protecting case 21a, and the electromagnetic induction bar 105 is installed in said hollow rod 31a.

The second shell has a hollow rod for being inserted inside said protecting case that the size and shape is fitted with, and the electromagnetic induction bar is installed in said rod.

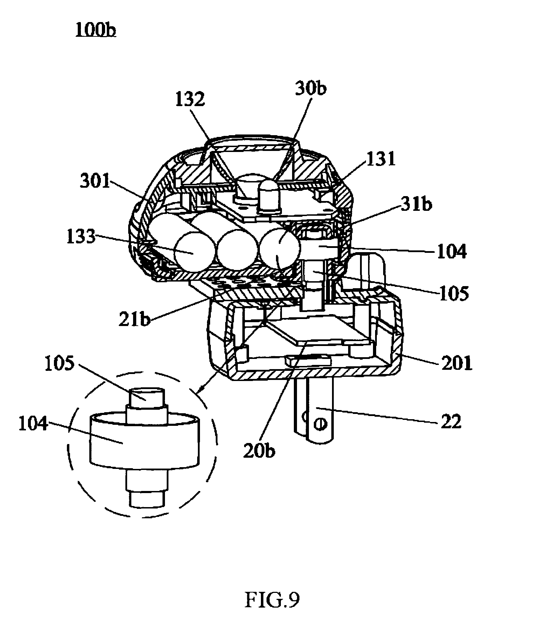

Refer Figs 9-11, which reveal the 3rd embodiment of said illuminator 100, a hollow rod 21 b is convex from the shell 201 of said charger 20b, and the electromagnetic induction bar 105 is installed in said hollow rod 21b; said shell 301 of the illuminator 30 contains a concave part forms a groove 31 b that the size and shape is fitted with said hollow rod 21b, the electromagnetic induction coil 104 is installed inside the shell 301 of the illuminator 30 and surrounding said groove 31 b.

Present invention also reveals an electrical charger for recharging the rechargeable battery 133 in the emergency illuminator 100, refer Figs 2-11, which comprises:
A charger 20(20a, 20b);
An electromagnetic induction device 10;
The charger 20, 20a, 20b comprises an electricity input socket 22 for connecting the electricity sources, the electromagnetic induction transmitting model 11 is installed in the shell 201 of said charger 20, 20a, 20b and connected with said electricity input socket 22, the electromagnetic induction receiving model 12 is installed inside the shell 301 of said emergency illuminator 100 and connected with the rechargeable battery 133, of course, the present invention can also recharge electronic products such as flashlight, small fan, electrical shaver, table lamp, head light and camping light.

As aforementioned, the present invention provides an emergency illuminator 100 with its charger, which gain smaller volume, lighter weight and lower production cost, in the other mean, the present invention increase the operating frequency of the receiving model 12 of the electromagnetic device, furthermore, with application of resonance circuit, the receiving effect is promoted effectively, and reduce the unnecessary consumption of the power.

What is described introduced in the description and drawings are only the best embodiment of the present invention, but could also be varied and modified as hereafter claimed.

## Claims

1. An electromagnetic induction device (10), comprising:
an electromagnetic induction transmitting model (11);
an electromagnetic induction receiving model (12);
a first shell (102) which is an independent unit;
a second shell (103) which is an independent unit;
said electromagnetic induction transmitting model (11) is installed in said first shell (102), and said electromagnetic induction receiving model (12) is installed in said second shell (103);
the output terminal of said electromagnetic induction transmitting model (11) comprises an electromagnetic induction coil (104); and
the input terminal of said electromagnetic induction receiving model (12) comprises an electromagnetic induction means (105);
said first shell (102) contains a concave part at where the electromagnetic induction coil (104) is installed, said concave part forming a groove; and
said second shell (103) contains a convex part at where the electromagnetic induction means (105) is disposed;
the size and shape of the groove of said concave part is fitted with said convex part, the electromagnetic induction means (105) would be inserted into the centre of the electromagnetic induction coil (104) when said convex part is inserted into said concave part, and the electrical current would occur by electromagnetic induction when the electricity enters into said electromagnetic induction coil (104) or electromagnetic induction bar (105) to produce the magnetic field;
**characterized in that**
said induction means is an induction bar (105);
the output frequency of said electromagnetic induction transmitting model (11) is 250-400 KHZ.

2. An electromagnetic induction device (10) in claim 1, wherein said electromagnetic induction transmitting model (11) comprises first induction circuit (114), and said electromagnetic induction receiving model (12) comprises second induction circuit (121);
said first and second induction circuit (121) are corresponding to each other, and said second induction circuit (121) is resonance induction circuit, said electromagnetic induction coil (104) or electromagnetic induction bar (105) becomes inductance of said resonance induction circuit.

3. An electromagnetic induction device (10) in claim 1, wherein:
the electromagnetic induction transmitting model (11) comprises:
a voltage step-down circuit (111) which is connected to the electricity input socket for connecting to the electricity source;
the output terminal of said voltage step-down circuit (111) is connected with first rectifier and filter (112);
the output terminal of said first rectifier and filter (112) is connected with a vibrating circuit (113); and
the output terminal of said vibrating circuit (113) is connected with first induction circuit (114);
the electromagnetic induction receiving model (12) comprises:
a second induction circuit (121) which can produce voltage by electromagnetic induction with the first induction circuit (114);
a second rectifier and filter connect with said second induction circuit (121);
a voltage-stabilizing circuit connects to the output terminal of said second rectifier and filter, the output terminal of said voltage-stabilizing circuit connects and supplies electricity to the load.

4. An electromagnetic induction device (10) in claim 1, **characterized by**:
the first shell (102) has a hollow rod is disposed on the bottom of the groove, and the electromagnetic induction bar (105) is installed in said hollow rod;
an annular protecting case that the size and shape is fitted with said groove is disposed on the second shell (103), said protecting case covers on said hollow rod, and the electromagnetic induction coil (104) is installed in the inside of said protecting case.

5. An electromagnetic induction device (10) in claim 1, **characterized by**:
an annular protecting case is disposed on the first shell (102), said protecting case covers on said hollow rod, and the electromagnetic induction coil (104) is installed in the inside of said protecting case;
the second shell (103) has a hollow rod for being inserted inside said protecting case that the size and shape is fitted with, and the electromagnetic induction bar (105) is installed in said rod.

6. An electromagnetic induction device (10) in claim 1, **characterized by**:
a hollow rod is convex from the first shell (102), and the electromagnetic induction bar (105) is installed in said hollow rod; said second shell (103) contains a concave part forms a groove that the size and shape is fitted with said hollow rod, the electromagnetic induction coil (104) is installed inside the second shell (103) and surrounding said groove.

7. An electrical charger for recharging electronic products, which comprises:
a charger (20);
an electromagnetic induction device (10) as in anyone of claims 1-7;
the charger (20) comprises an electricity input socket (22) for connecting the electricity sources, the electromagnetic induction transmitting model (11) being installed in the shell of said charger (20) and connected with said electricity input socket (22), the electromagnetic induction receiving model (12) being installed inside the shell of said electronic products and connected with the battery which is for power supplying of said electronic products.

8. An emergency illuminator (30), which comprises:
a charger (20);
an illuminator (30); and
an electromagnetic induction device (10) as in anyone of claims 1-7;
said charger (20) comprises an electricity input socket (22) for connecting the electricity sources;
the shell (301) of said illuminator (30) contains a rechargeable battery (133), a sensor (134), illuminating control circuit (131) and an illuminating circuit (132);
the electromagnetic induction transmitting model (11) in claim 1 is installed in the shell of said charger (20) and connected with said electricity input socket (22); the electromagnetic induction receiving model (12) is installed inside the shell (301) of said illuminator (30), and connected with said rechargeable battery (133) which is connected with said illuminating circuit (132) for supplying power used for illumination, said illuminating control circuit controls the switch on/off status of said illuminating circuit by the signal from the sensor.

## Patentansprüche

1. Eine elektromagnetische Induktionsvorrichtung (10), umfassend:
eine elektromagnetische Induktion Übertragungsmodell (11);
eine elektromagnetische Induktion Empfangs Modell (12);
eine erste Schale (102), die eine unabhängige Einheit ist;
eine zweite Schale (103), die eine unabhängige Einheit ist;
wobei die elektromagnetische Induktion Übertragungsmodell (11) in der ersten Schale (102) installiert ist, und
die elektromagnetische Induktion Empfangs Modell (12) in der zweiten Schale (103) installiert ist;
wobei der Ausgangsterminal des elektromagnetischen Induktionsübertragungsmodell (11) umfasst eine elektromagnetische Induktionsspule (104); und
der Eingangsterminal des elektromagnetischen Induktion Empfangs Modell (12) umfasst eine elektromagnetischen Induktionsmittel (105);
wobei die erste Schale (102) enthält einen konkaven Teil, wo die elektromagnetische Induktionsspule (104) installiert ist, wobei der konkave Teil eine Nut bildet; und
wobei die zweite Schale (103) enthält einen konvexen Teil auf, wo die elektromagnetischen Induktionsmittel (105), angeordnet ist;
die Größe und die Form der Nut des genannten konkaven Teils ist mit dem genannten konvexen Teil ausgestattet, die elektromagnetischen Induktionsmittel (105) würde in der Mitte der elektromagnetischen Induktionsspule (104) eingeführt werden, wenn der genannte konvexe Teil in den genannten konkaven eingeführt ist, und der elektrische Strom würde durch elektromagnetische Induktion auftreten, wenn der Strom in die genannte elektromagnetische Induktionsspule (104) eintritt oder elektromagnetischen Induktionsstange (105), um das Magnetfeld zu erzeugen;
**dadurch gekennzeichnet**,
genannten Induktionsmittel ist eine Induktionsstange (105);
die Ausgangsfrequenz des elektromagnetischen Induktion Übertragungsmodell (11) ist 250-400 KHZ.

2. Eine elektromagnetische Induktionsvorrichtung (10) nach Anspruch 1, wobei die elektromagnetische Induktionsübertragungsmodell (11) eine erste Induktionskreis (114) umfasst und die genannte elektromagnetische Induktionsempfangsmodell (12) eine zweite Induktionskreis (121) umfasst;
die genannten ersten und zweiten Induktionskreis (121) zueinander entspricht, und die genannte zweite Induktionskreis (121) Resonanzinduktionskreis ist, wobei die elektromagnetische Induktionsspule (104) oder elektromagnetische Induktionsstange (105) Induktivität der Resonanzinduktionskreis wird.

3. Eine elektromagnetische Induktionsvorrichtung (10) nach Anspruch 1, wobei:
die elektromagnetische Induktionsübertragungsmodell (11) umfasst:
ein Spannungsuntersetzungsschaltung (111), die für den Anschluss an die Stromquelle an die Stromeingangsbuchse verbunden ist;
der Ausgangsterminal die genannten Spannungsuntersetzungsschaltung (111) mit einem ersten Gleichrichter und Filter (112) verbunden ist;
der Ausgangsterminal des ersten Gleichrichter und Filter (112) mit einem Schwingkreis (113) verbunden ist; und
der Ausgangsterminal des genannten Schwingkreis (113) ist mit ersten Induktionskreis (114) verbunden ist;
die elektromagnetische Induktionsempfangsmodell (12) umfasst:
eine zweite Induktionskreis (121), die Spannung, die durch elektromagnetische Induktion mit der ersten Induktionskreis (114) erzeugen kann;
einen zweiten Gleichrichter und Filter verbinden mit der zweiten Induktionskreis (121);
eine Spannungsstabilisierungsschaltung verbindet mit dem Ausgangsterminal des genannten zweiten Gleichrichter und Filter,
der Ausgangsterminal die genannte Spannungsstabilisierungsschaltung verbindet und liefert Strom an die Last.

4. Eine elektromagnetische Induktionseinrichtung Induktionsvorrichtung (10) nach Anspruch 1, **gekennzeichnet durch**:
die erste Schale (102) hat ist eine hohle Stange die auf dem Boden der Nut angeordnet ist, und die elektromagnetische Induktionsstange (105) in der genannte hohle Stange angebracht ist;
einen ringförmigen Schutzgehäuse, dass die Größe und Form mit der Nut ausgestattet ist auf der zweiten Schale (103) angeordnet ist, wobei die gennannte Schutzgehäuse Abdeckung auf die gennannte hohle Stange und die elektromagnetische Induktionsspule (104) ist im Inneren des Schutzgehäuses installiert.

5. Eine elektromagnetische Induktionsvorrichtung (10) nach Anspruch 1, **gekennzeichnet durch**:
ein ringförmiger Schutzgehäuse an der ersten Schale (102) angeordnet ist, wobei die gennannte Schutzgehäuse Abdeckung auf der gennannte hohle Stange und die elektromagnetische Induktionsspule (104) ist in der Innenseite des Schutzgehäuses installiert;
die zweite Schale (103) hat eine hohle Stange um auf die Innenseite des gennannte Schutzgehäuses eingeführt vorgesehen wird, dass die Größe und Form ausgestattet ist, und die elektromagnetische Induktionsstange (105) ist in der Stange installiert.

6. Eine elektromagnetische Induktionsvorrichtung (10) nach Anspruch 1, **gekennzeichnet durch**:
eine hohle Stange ist aus der ersten Schale (102) konvex und die elektromagnetische Induktionsstange (105) in der hohle Stange angebracht ist; wobei die zweite Schale (103) einen konkaven Teil enthält die eine Nut bildet, dass die Größe und Form mit dem genannten hohle Stange ausgestattet ist, die elektromagnetische Induktionsspule (104) innerhalb der zweiten Schale (103) installiert ist und die genannten Nut umgibt.

7. Ein elektrisches Ladegerät für um elektronische Produkte aufzuladen, umfassend:
ein Ladegerät (20);
eine elektromagnetische Induktionsvorrichtung (10) nach einem der Ansprüche 1-7;
das Ladegerät (20)
einen Strom-Eingangsbuchse (22) um die Stromquellen zu verbinden umfasst, wobei die elektromagnetische Induktionsübertragungsmodell (11) in der Schale des gennannten Ladegerät (20) eingebaut ist, und mit der gennannte Strom-Eingangsbuchse (22) verbunden ist
wobei, die elektromagnetische Induktionsempfangsmodell (12) im Inneren des Gehäuses der genannten elektronischen Produkte installiert ist und mit der Batterie verbunden ist, die für die Leistung der elektronischen Produkte zu liefern ist.

8. Ein Notfall-Beleuchtungsvorrichtung (30), umfassend:
ein Ladegerät (20);
ein Beleuchtungsvorrichtung (30); und
eine elektromagnetische Induktionsvorrichtung (10) nach einem der Ansprüche 1-7;
das genannte Ladegerät (20) umfasst einen Stromeingangsbuchse (22) um die Stromquellen zu verbinden;
die Schale (301) der genannte Beleuchtungseinrichtung (30) umfasst eine wiederaufladbaren Batterie (133), einen Sensor (134), Beleuchtungssteuerschaltung (131) und eine Beleuchtungsschaltung (132);
die elektromagnetische Induktionsübertragungsmodell (11) in Anspruch 1 in der Schale, das Ladegerät (20) installiert ist und mit der genannten Stromeingangsbuchse (22) verbunden; die elektromagnetische Induktionsempfangsmodell (12) ist innerhalb der Schale (301) der genannten Beleuchtungsvorrichtung (30) installiert und mit der wiederaufladbaren Batterie (133) verbunden, die mit der Beleuchtungsschaltung (132) zum Zuführen von Energie für die Beleuchtung verwendet verbunden ist, wobei Beleuchtungssteuerschaltung steuert den Schalter Ein / aus-Status der genannte Beleuchtungsschaltung durch das Signal von dem Sensor.

## Revendications

1. Un dispositif d'induction électromagnétique (10), comprenant :
un modèle transmetteur d'induction électromagnétique (11) ;
un modèle récepteur d'induction électromagnétique (12) ;
une première enveloppe (102) qui est une unité indépendante ;
une deuxième enveloppe (103) qui est une unité indépendante ;
ledit modèle transmetteur d'induction électromagnétique (11) est installé dans ladite première enveloppe (102), et ledit modèle récepteur d'induction électromagnétique (12) est installé dans ladite deuxième enveloppe (103) ;
la borne de sortie dudit modèle transmetteur d'induction électromagnétique (11) comprend une bobine d'induction électromagnétique (104) ; et
la borne d'entrée dudit modèle récepteur d'induction électromagnétique (12) comprend un moyen d'induction électromagnétique (105) ;
ladite première enveloppe (102) comporte une partie concave au niveau de laquelle est installée la bobine d'induction électromagnétique (104), ladite partie concave formant une rainure ; et
ladite deuxième enveloppe (103) comporte une partie convexe au niveau laquelle est installé le moyen d'induction électromagnétique (105) ;
la taille et la forme de la rainure de ladite partie concave sont ajustées à ladite partie convexe, le moyen d'induction électromagnétique (105) devrait être inséré au le centre de la bobine d'induction électromagnétique (104) lorsque ladite partie convexe est insérée dans ladite partie concave, et le courant électrique se produirait par induction électromagnétique lorsque l'électricité entre dans ladite bobine d'induction électromagnétique (104) ou que la barre d'induction électromagnétique (105) produit le champ magnétique ;
**caractérisé en ce que**
ledit moyen d'induction est une barre d'induction (105) ;
la fréquence de sortie dudit modèle transmetteur d'induction électromagnétique (11) est de 250 à 400 KHz.

2. Un dispositif d'induction électromagnétique (10) selon la revendication 1, dans lequel ledit modèle transmetteur d'induction électromagnétique (11) comprend un premier circuit d'induction (114) et ledit modèle récepteur d'induction électromagnétique (12) de réception comprend un deuxième circuit d'induction (121) ;
lesdits premier et deuxième circuits d'induction (121) correspondent l'un à l'autre, et ledit deuxième circuit d'induction (121) est en circuit d'induction en résonance, ladite bobine d'induction électromagnétique (104) ou la barre d'induction électromagnétique (105) devient une inductance dudit circuit d'induction en résonance.

3. Un dispositif d'induction électromagnétique (10) selon la revendication 1, dans lequel :
le modèle transmetteur d'induction électromagnétique (11) comprend :
un circuit abaisseur de tension (111) qui est connecté à la prise d'entrée électrique pour la connexion à la source d'électricité ;
la borne de sortie dudit circuit abaisseur de tension (111) est connectée au premier redresseur et filtre (112) ;
la borne de sortie dudit premier redresseur et filtre (112) est connectée à un circuit vibrant (113) ; et
la borne de sortie dudit circuit vibrant (113) est connectée au premier circuit d'induction (114) ;
le modèle récepteur d'induction électromagnétique (12) comprend :
un deuxième circuit d'induction (121), qui peut produire une tension par induction électromagnétique avec le premier circuit d'induction (114) ;
un deuxième redresseur et filtre connecté avec ledit deuxième circuit d'induction (121) ;
un circuit de stabilisation de tension se connecte à la borne de sortie dudit deuxième redresseur et filtre, la borne de sortie dudit circuit de stabilisation de tension se connecte et fournit de l'électricité à la charge.

4. Un dispositif d'induction électromagnétique (10) selon la revendication 1, **caractérisé par :**
**le fait que** la première enveloppe (102) comporte une tige creuse qui est disposée sur le fond de la rainure et la barre d'induction électromagnétique (105) est installée dans ladite tige creuse ;
**le fait que** un boîtier de protection annulaire, dont la taille et la forme sont ajustées à ladite rainure, est disposé sur la deuxième enveloppe (103), ledit boîtier de protection couvre ladite tige creuse, et la bobine d'induction électromagnétique (104) est installée à l'intérieur dudit boîtier de protection.

5. Un dispositif d'induction électromagnétique (10) selon la revendication 1, **caractérisé par :**
**le fait qu'**un boîtier de protection annulaire est disposé sur la première enveloppe (102), ledit boîtier de protection couvre ladite tige creuse et la bobine d'induction électromagnétique (104) est installée à l'intérieur dudit boîtier de protection ;
**le fait que** la deuxième enveloppe (103) comporte une tige creuse destinée à être insérée à l'intérieur dudit boîtier de protection dont la taille et la forme sont ajustées à celle-ci, et la barre d'induction électromagnétique (105) est installée dans ladite tige.

6. Un dispositif d'induction électromagnétique (10) selon la revendication 1, **caractérisé par** :
une tige creuse qui est convexe à partir de la première enveloppe (102) et la barre d'induction électromagnétique (105) qui est installée dans ladite tige creuse ; ladite deuxième enveloppe (103) comporte une partie concave qui forme une rainure dont la taille et la forme est ajustée à ladite tige creuse, la bobine d'induction électromagnétique (104) est installée à l'intérieur de la deuxième enveloppe (103) et entoure ladite rainure.

7. Un chargeur électrique pour recharger les produits électroniques, qui comprend :
un chargeur (20) ;
un dispositif d'induction électromagnétique (10) selon l'une quelconque des revendications 1 à 7 ;
le chargeur (20) comprend une prise d'entrée électrique (22) pour connecter les sources d'électricité, le modèle transmetteur d'induction électromagnétique (11) étant installé dans l'enveloppe dudit chargeur (20) et relié à ladite prise d'entrée électrique (22), le modèle récepteur d'induction électromagnétique (12) étant installé à l'intérieur de l'enveloppe desdits produits électroniques, et connecté à la batterie qui est destinée à fournir de l'énergie auxdits produits électroniques.

8. Un dispositif d'éclairage d'urgence (30), qui comprend :
un chargeur (20) ;
un illuminateur (30) ; et
un dispositif électromagnétique à induction (10) selon l'une quelconque des revendications 1 à 7 ;
ledit chargeur (20) comprend une prise d'entrée électrique (22) pour relier les sources d'électricité ;
l'enveloppe (301) dudit illuminateur (30) contient une batterie rechargeable (133), un capteur (134), un circuit de commande d'illumination (131) et un circuit d'illumination (132) ;
le modèle transmetteur d'induction électromagnétique (11) dans la revendication 1 est installé dans l'enveloppe dudit chargeur (20) et est connecté à ladite prise d'entrée électrique (22) ; le modèle récepteur d'induction électromagnétique (12) est installé à l'intérieur de l'enveloppe (301) dudit illuminateur (30) et est connecté à ladite batterie rechargeable (133) qui est connectée avec ledit circuit d'illumination (132) pour la fourniture de la puissance utilisée pour une illumination, ledit circuit de commande d'illumination commande le commutateur marche / arrêt dudit circuit d'illumination par le signal du capteur.
